Europäisches Patentamt

European Patent Office

Office européen des brevets

(11) Publication number: **0 143 094**
**A2**

## (12) EUROPEAN PATENT APPLICATION

(21) Application number: **84850318.1**

(22) Date of filing: **23.10.84**

(51) Int. Cl.⁴: **B 27 M 3/00**

(30) Priority: **16.11.83 SE 8306316**

(43) Date of publication of application:
**29.05.85 Bulletin 85/22**

(84) Designated Contracting States:
**AT DE FR GB IT NL**

(71) Applicant: **Televerket**
**Televerkets Huvudkontor Fack**
**S-123 86 Farsta(SE)**

(72) Inventor: **Olofsson, Stig**
**Utsiktsvägen 11**
**S-149 01 Nynäshamn(SE)**

(74) Representative: **Karlsson, Berne et al,**
**Televerkets Huvudkontor Patent Department Fack**
**S-123 86 Farsta(SE)**

(54) **Plate.**

(57) A base plate exhibits an upward projecting peripheral rim and slots (3) standing on edge arranged in said rim. The plate consists of a first, preferably flat unit (1) executed in wood and a second component arranged next to it and executed in solid wood in the form of a composite frame in three or more parts (2a, 2b, 2c and 2d). Each part of the frame exhibits a high degree of drying and has been heat treated in such a way that the pith fibres of the wood are sealed by resin released from the wood. The surface of each part of the frame has also been treated with varnish or a similar substance which seals the surface pores of the wood. Each part of the frame is so arranged that the longitudinal direction of the wood coincides essentially with the height direction of the plate. A reinforcing element (2b) prevents the occurance of any warping of the wood caused by internal stresses which may be present in the wooden material.

EP 0 143 094 A2

## TITLE OF THE INVENTION

Plate

## TECHNICAL FIELD

The present invention relates to a plate intended in particular for a telephone apparatus or some other apparatus and executed in wood, for example a base plate, which exhibits an upward projecting peripheral rim and slots standing in said rim.

## DISCRIPTION OF THE PRIOR ART

The execution of plates of this kind in wood has been previously disclosed. In the case of telephone apparatuses, for example, there exists a wish to be able to execute apparatus cases and the associated plates in wood so that, when viewed from the outside, each apparatus is able to exhibit a construction which corresponds to the construction of apparatuses executed in, for example, a plastics material. Telephone apparatuses executed in wooden material must be capable of being used in a conventional manner in those enviroments which are normally encountered by telephone apparatuses as such.

The design of telephone apparatuses or similar apparatuses in wood imposes high demands in the execution of the apparatus as such. Thus, for example, the wooden telephone apparatus must be able to accommodate the same amount of telecommunications components as a conventional telephone apparatus executed in a different material.

## DESCRIPTION OF THE PRESENT INVENTION
### TECHNICAL PROBLEMS

Base plates executed in wooden material are exposed to high demands from the point of view of moisture and strength, amongst others. The wooden material cannot be allowed to develop cracks or to fall apart after a certain period of use. The aforementioned slots, which are in the form of acoustic slots as a general rule, also impose special requirements on the apparatus from the point of view of strength.

### SOLUTION

The present invention has as its principal object the presentation of a plate which will solve the problem outlined in the above, and what may principally be regarded as being charateristic of the novel plate is that it consists of a first, preferably flat unit executed in wood and a second component arranged next to it and executed in solid wood in the form of a composite frame in three or more parts. Other characteristic features are that each frame part exhibits a high degree of drying and has been heat treated in such a way that the pith fibres of the wood are sealed by the resin released from the wood and has been surface treated with varnish or a similar fluid which seals the surface pores of the wood. Other characteristic features are that each frame part is so arranged that the longitudinal direction of the wood coincides essentially with the height direction of the plate, and that there is arranged to the free and edge of the frame part a reinforcing element which prevents the occurence of any warping in the wood caused by any internal stresses which may be present in the wooden material.

Further developments of the idea of invention take into account the manner in which the reinforcing element is to be arranged at the aforementioned free and edge.

## ADVANTAGES

Through the use of what is proposed above it is possible, for example, to produce a base plate for a telephone apparatus which may be used in the normal enviroment for the telephone apparatus without running the risk that cracking and warping of the wood will occur as the result of moisture. The novel plate also makes it possible in this case for the long-term use of the plate in this context to be achieved in the absence of the aforementioned cracking and warping problems. Since the parts which extend between the aforementioned slots are so arranged as to coincide with the longitudinal direction of the wood, the strength of the wood can be utilized in such a way as to provide a strong structure from the mechanical point of view.

The use of an extremely high degree of drying of the inside of the aforementioned frame parts means that it has been possible to achieve a low moisture content in the core of the wood. By sealing the aforementioned pith fibres with the help of the wood's own resin, the re-absorption of moisture by the cores of the frame parts is effectively prevented. The sealing of the surface pores of the wood with varnish or a similar fluid counteracts the re-absorption of moisture. Although a small amount of moisture is re-absorbed at the surface of the frame parts, further penetration to the cores of the frame parts is prevented. Any minor stresses which may occur as the result of different moisture levels at the surface zones of the frame will gradually be balanced out.

DESCRIPTION OF THE DRAWINGS

A preferred embodiment of a plate exhibiting the significant characteristic features of the invention is described below with simulantaneous reference to the accompanying drawings, in which:

Fig.1    shows a view seen horizontally from above of a base plate designed to form part of wooden telephone apparatus;

Fig.2    shows a side view of the base plate in accordance with Fig.1;

Fig.3    shows from below the base plate in accordance with Figs.1 and 2.

DESCRIPTION OF THE PREFERRED EMBODIMENT

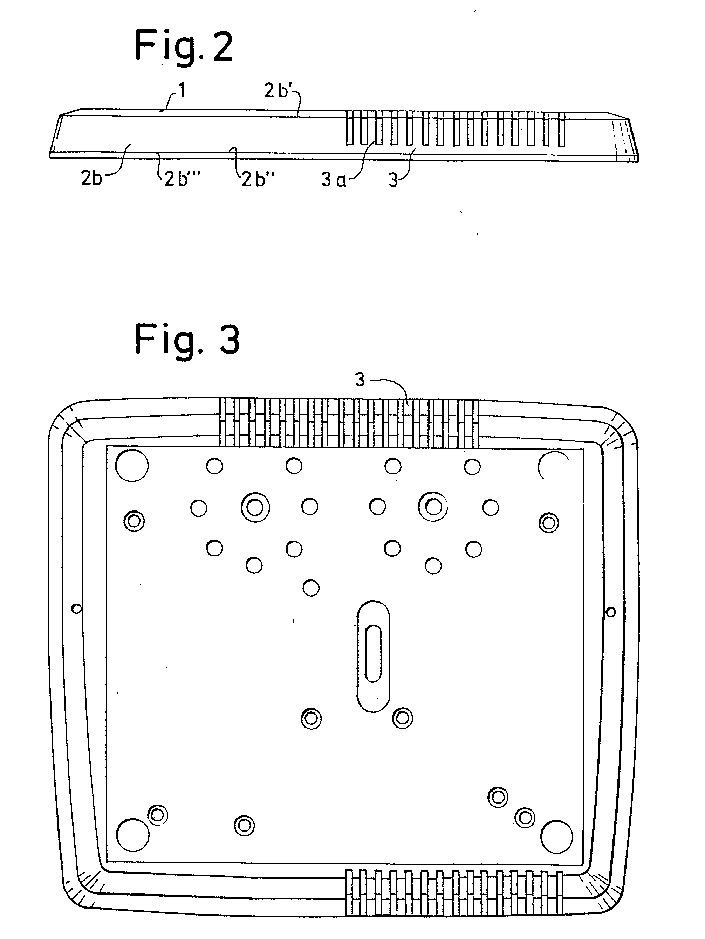

The base plate as such is a design which is dependent upon the construction of the telephone apparatus in question. The design of the base plate may thus vary considerably, and as this is assumed to have been previously disclosed it is not proposed to describe it any greater detail here. All that need be established is that the base plate exhibits an essentially flat unit 1 and arranged next to it a unit in the form of a frame which is composed in the present case of four frame parts 2a, 2b, 2c and 2d. The frame parts are gued by means of a previously disclosed adhesive and in a previously disclosed fashion. The frame 2a-2d is also securely glued in a similar fashion to the unit 1, on which the frame forms an upward projecting peripheral rim. One or more of the aforementioned frame parts may be exeuted with slots standing on edge. In the present frame parts 2b and 2d are provided with such slots, whilst the remaining two frame parts do not have the aforementioned slots. As may be appreciated from Fig. 3, the slots may extend partly into the unit 1.

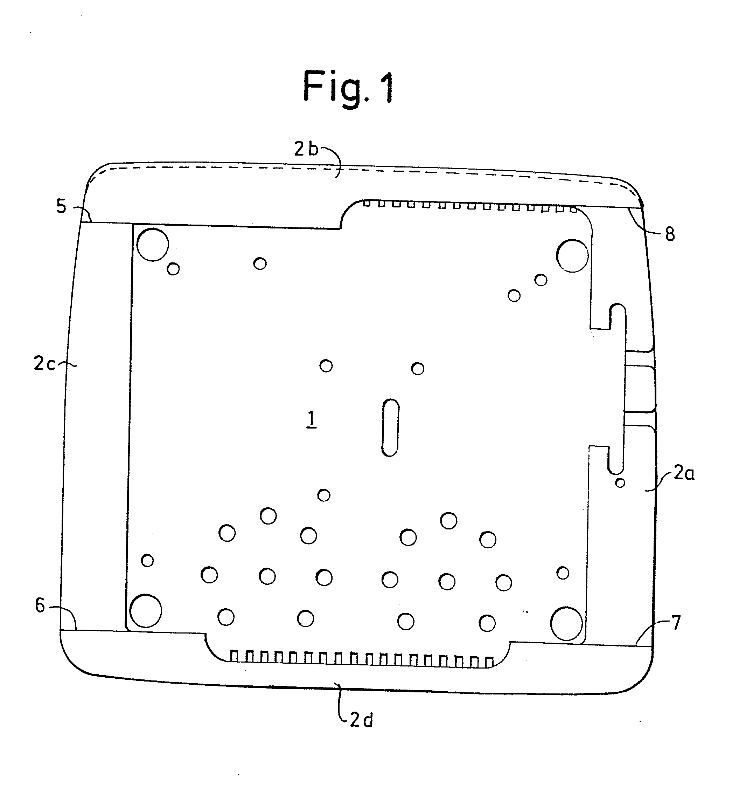

The joining lines for the frame parts are indicated in Fig. 1 by the refererence designations 4, 5, 6 and 7. The sectional area of the frame parts in relation to the unit 1 is indicated in Fig. 2 by the symbol 2b'. Other frame parts exhibit similar sectional areas. Each frame part also exhibits a sectional area 2b at its free and edge. To this sectionl area is applied a reinforcing element 2b forming part of each frame part. Other frame parts exhibit a similar construction with similar reinforcing elements. The reinforcing element 2b may be executed in the same type of wood as the rest of the frame parts, or in a different type of wood. The frame parts and possibly also the unit 1 are executed in solid wood, for example mahogany, walnut, curly-grained birch, wavy-grained birch, sycamore, cherry and/or African rosewood. The unit 1 may be executed in cross-laminated veneer.

What is significant for the frame parts in accordance with the invention is that they have undergone a process which has produced an extremely low residual moisture content. The aforementioned moisture content may be of the order of magnitude of 4-5 per cent by weight. Also characteristic of the wood is that, at the end of the drying period, the resign has been caused to flow from the wood in such a way as to seal the pith fibres of the wood, and in such a way that the hemicellulose in the wood has been broken down. The surface pores of the frame parts are also sealed with varnish or a similar fluid with the intention of preventing the re-absorption of moisture by the wood. A further major characteristic feature is that the wood in the frame parts has been selected in such a way that the principal direction of the grain of the wood or is longitudinal direction coincides with the height direction of the plate, as indicated by the arrow 8 in Fig. 2. The parts 3a between the slots 3 thus coincide with the longitudinal direction of the wood, thereby guaranteeing maximum strength. The aforementioned parts 3a may be reinforced, if necessary, on the inside, for example by means of cross-laminated veneer.

The aforementioned degree of drying of the frame parts and possibly also the unit 1 can be achieved in a previously disclosed fashion by means of vaccum drying. The drying process in question commences with a long heating-up period at a first temperature, for example 50°C. Once the timber or the plank from which the frame parts have been taken thoroughly heated through, that is to say all the way to the core, the timber or plank is subjected to a vacuum for a comparatively short time. The remainder of the drying process consists of succesive of heating and exposure to vacuum in order to achieve the desired driving off of the moisture. At the end of the drying period the temperature is increased to 65°C, at which the outflow of the resin and the breaking down of the hemicellulose will take place. The blanks are then cut from the dried plank and are worked into their final form. A certain amount of moisture may be re-absorbed at the surface of the timber during the working process. Any moisture which is re-absorbed will, however, remain at the surface of the timber, and any resulting internal stresses in the wood will gradually even themselves out.

It will be appreciated from the above that the form of the base plate has no real significance for the invention as such, and that the aforementioned form may thus vary within wide limits.

The invention is not restricted to the embodiment described above by the way of example, but may undergo modifications within the context of the following Patent Claims and the idea of invention.

PATENT CLAIMS

1. A plate, for example a base plate, intended in particular for a telephone apparatus or some other apparatus and executed in wood, which exhibits an upward projecting peripheral rim and slots (3) standing on edge arranged in said rim, c h a r a c - t e r i z e d in that the plate consists of a first, preferably flat unit (1) executed in wood and a second component arranged next to it and executed in solid wood in the form of a composite frame in three or more parts (2a, 2b, 2c, and 2d), in that each frame part exhibits a high degree of drying and has been heat treated in such a way that the pith fibres of the wood are sealed by the resin released from the wood and has been surface treated with varnish or a similar substance with seals the surface pores of the wood, in that each part of the frame is so arranged that the longitudinal direction of the wood coincides essentially with the height direction (8) of the plate, and in that there is arranged next to the free end edge (2b) of the frame part a reinforcing element (2b) which prevents the occurance of any warping in the wood caused by internal stresses which may be present in the wooden material.

2. A plate in accordance with Patent Claim 1, c h a r a c - t e r i z e d in that the reinforcing element covers either all or parts of the aforementioned end edge.

3. A plate in accordance with Patent Claim 1 or 2, c h a - r a c t e r i z e d in that the frame parts are joined to each other and are connected to the unit (1) by means of a previously disclosed adhesive.

0143094

# Fig. 1

# Fig. 2

1  2b'  2b  2b'''  2b''  3a  3

# Fig. 3

3